# EUROPÄISCHE PATENTSCHRIFT

(11) **EP 1 175 071 B1**
(45) Veröffentlichungstag und Bekanntmachung des Hinweises auf die Patenterteilung: **02.07.2014**
(21) Anmeldenummer: 01111549.0
(22) Anmeldetag: 11.05.2001
(51) Int. Cl.: G06F 17/30, H04M 1/2745

(54) **Verfahren zum Suchen von Daten in zumindest zwei Datenbanken und Datenbanksystem mit zumindest zwei Datenbanken**
Method for searching of data in at least two databases and database system with at least two databases
Procédé pour rechercher des données dans au moins deux bases de données et système de base de données avec au moins deux bases de données

(30) Priorität: 02.06.2000 DE 10027523
(43) Veröffentlichungstag der Anmeldung: 23.01.2002
(73) Patentinhaber: MobileMedia Ideas LLC, Chevy Chase, MD 20815 (US)
(72) Erfinder: Josenhans, Michael, 25474 Ellerbeck (DE)
(74) Vertreter: Walke, Christoph Martin

(56) Entgegenhaltungen:
- EP-A- 0 295 876
- WO-A-99/55058
- DE-A- 19 928 666
- US-A- 4 453 217
- US-A- 5 659 732
- US-A- 5 903 632

## Beschreibung

Die Erfindung betrifft ein Verfahren zum Suchen von Daten in zumindest zwei Datenbanken, insbesondere zum Suchen von Telefonbuch-, Adreßbuch- oder Terminkalendereinträgen oder dergleichen in zumindest zwei Telefonbuch-, Adreßbuch- oder Terminkalender- Datenbanken oder dergleichen, sowie ein Datenbanksystem mit zumindest zwei Datenbanken, das insbesondere zur Durchführung des erfindungsgemäßen Verfahrens zum Suchen von Daten geeignet ist.

Mit zunehmender Verbreitung von elektronischen Einrichtungen, wie beispielsweise Mobiltelefonen, also Autotelefonen und sogenannten Handys, schnurlosen Telefonen, die über eine an das Festnetz angeschlossene Basisstation kommunizieren, elektronischen Notizbücher und PC's, die Datenbanken, wie beispielsweise persönliche Telefonbücher, Terminkalender, persönliche Adreßbücher, Aufgabenlisten, und dergleichen enthalten, wächst das Problem, daß ein Anwender verschiedene elektronische Telefonbücher und/oder elektronische Terminkalender zu verwalten hat. Nutzt ein Anwender beispielsweise zu Hause in seiner Wohnung ein schnurloses Telefon mit einem elektronischen Telefonbuch, so sind dort hauptsächlich private Telefonnummern gespeichert, während in seinem Dienst-Handy hauptsächlich dienstliche Telefonnummern aufgezeichnet sind. Weitere Telefonbucheinträge können im Autotelefon abgespeichert sein und wenn er zusätzlich noch ein privates Mobiltelefon oder Handyverwendet, finden sich dort weitere, private und dienstliche Telefonnummern. Wichtige Telefonnummern sind dabei häufig in mehreren verwendeten Kommunikationseinrichtungen des Anwenders gespeichert, während andere Telefonnummern jeweils nur in einem einzigen der persönlichen Telefonbücher zu finden sind. Weiter kann der Anwender zusätzlich Zugriff auf elektronische Telefonbücher in seinem privaten und/oder Arbeitsplatz-PC haben.

Ferner weisen eine Reihe von Mobiltelefonen, die mit einer SIM-Karte (subscriber identity module; Teilnehmeridentitätsmodul) betrieben werden, die Möglichkeit auf, Telefonbucheinträge entweder im Speicher der SIM-Karte oder in einem weiteren Speicher des Geräts selbst zu speichern. Dies ist beispielsweise bei dem Nokia 9110 Communicator der Fall. Während auf der SIM-Karte beim gegenwärtigen Stand der Technik 125 Einträge möglich sind, können im Speicherbereich des Nokia 9110 Communicators, je nach verwendetem Zusatzspeicher, einige 100 bis einige 1000 Einträge vorgenommen werden.

Ein paralleler Zugriff auf die verschiedenen Speicherbereiche bzw. auf die verschiedenen elektronischen Telefonbücher ist bisher nicht möglich, so daß ein Anwender entweder sämtliche ihm zur Verfügung stehenden Telefonbücher ständig miteinander abgleichen muß, wenn er alle Telefonnummern stets zur Verfügung haben will oder die einzelnen elektronischen Telefonbücher nacheinander durchsuchen muß. Die hier im Zusammenhang mit elektronischen Telefonbüchern mit mobilen und schnurlosen Telefonen beschriebene Problematik trifft aber auch beispielsweise auf Adreßbücher, Terminkalender und andere Datenbanken zu, die in PC's, elektronischen Terminkalendern und -planern und dergleichen vorgesehen sind.

Aus der DE 196 44 104 C1 ist eine Kommunikationseinrichtung bekannt, die in einem Mobiltelefon einen Hauptdatenspeicher und in einem Sprachwählgerät, das über ein Kabel mit dem Mobiltelefon verbunden ist, einen Kurzwahlspeicher aufweist. Der Hauptdatenspeicher dient dabei als Datenbank für ein persönliches Telefonbuch, während der Kurzwahlspeicher einen Teil der im persönlichen Telefonbuch registrierten Daten speichert, über die auf die Telefonbucheinträge zugegriffen werden kann, um eine gespeicherte Telefonnummer zu wählen. Der Hauptdatenspeicher hat hierbei Zugriff auf den Kurzwahlspeicher und kann eingetragene Daten verändern und/oder ergänzen, um sicherzustellen, daß auf die im Hauptdatenspeicher gespeicherte Telefonnummern über dem Kurzwahlspeicher zuverlässig zugegriffen werden kann.

Ein gleichzeitiges Durchsuchen beider miteinander verbundener Speicher ist hierbei nicht erforderlich, da der Kurzwahlspeicher kein anderes persönliches Telefonbuch, sondern nur eine Datenliste darstellt, in der zu Telefonbucheinträgen im Hauptdatenspeicher der Name des Eintrags und der Speicherplatz abgespeichert ist.

Weiterhin sind aus dem Stand der Technik die Patentdokumente WO9955058, EP0295876, US4453217 und US5659732 bekannt.

Dokument WO9955058 betrifft ein Verfahren der Informationssuche, in einer extern gewarteten Datenbank oder einer persönlichen Telefonnummer-Datenbank , um ein Suchkriterium bereitzustellen, und um das Suchkriterium mit den zwei Datenbanken abzugleichen, um eine einzelne Liste von Ergbebnissen zu erzeugen.

Dokument EP0295876 betrifft einen parallelen, assoziativen Speicher der eine Möglichkeit bereitstellt, beobachte Datenmuster zu identifizieren bzw. zu erkennen. Jeder von mehreren Speichern speichert mehrere Erkennungsmuster. In Antwort auf den Empfang eines zu erkennenden Musters wird das Abrufmuster gleichzeitig mit den in dem Speichern gespeicherten Erkennungsmustern verglichen und ein exakt passendes oder das am besten passende Erkennungsmuster wird gewählt.

Dokument US4453217 beschreibt eine Anordnung zur Rechtschreibkorrektur zur Verwendung in Anwendungen zum Nachschlagen in Verzeichnis. Die Anordnung korrigiert Fehler, indem der Name in dem Verzeichnis gefunden wird, der am ehesten dem von dem Benutzer gesuchten Namen an ehesten gleicht.

Dokument US5659732 betrifft ein Suchverfahren das mehrere Datenbanken verwendet, die von einem oder mehreren Servern zugänglich sind und ein oder mehrere Suchmaschinen verwenden. Für jede Datenbank wird die Häufigkeit von Einträgen und die Anzahl von Suchanfragentreffern bestimmt und zusammen mit Identifikationen von Datenbankeinträgen, die den Treffern entsprechen berichtet.

Davon ausgehend liegt der Erfindung die Aufgabe zugrunde, ein Verfahren und ein Datenbanksystem der eingangs genannten Art bereitzustellen, das einen gleichzeitigen Zugriff auf zwei oder mehr Datenbanken ermöglicht, um darin eine Suche wie in einer einzigen Datenbank ausführen zu können.

Diese Aufgabe wird durch das Verfahren nach Anspruch 1 sowie das Datenbanksystem nach Anspruch 7gelöst. Vorteilhafte Weiterbildungen des Verfahrens und des Datenbanksystems sind in den jeweiligen nachgeordneten Unteransprüchen beschrieben.

Das erfindungsgemäße Verfahren zeichnet sich unter anderem dadurch aus, dass auf die Eingabe eines Suchbegriffs hin entsprechend dem eingegebenen Suchbegriffs aus jeder der Datenbanken der oder mehrere Vorgänger und der oder mehrere Nachfolger des Suchbegriffs sowie, falls vorhanden, der Suchbegriff selbst in einer Suchtabelle gespeichert werden, und der Suchbegriff, falls er in der Suchtabelle gespeichert ist, oder der Begriff angezeigt wird, der von den in der Suchtabelle gespeicherten Nachfolgern dem eingegebenen Suchbegriff am nächsten nachfolgt. Dabei ist es besonders vorteilhaft das der angezeigte Nachfolger als Suchbegriff für die Aktualisierung der Suchtabelle benutzt wird.

Erfindungsgemäß wird also eine Suchtabelle angelegt, in der für jede angeschlossene Datenbank zumindest der unmittelbare Vorgänger und der unmittelbare Nachfolger des eingegebenen Suchbegriffs und, falls der Suchbegriff selbst ebenfalls in der Datenbank gefunden wurde, auch der Suchbegriff selbst gespeichert wird. Wurde der Suchbegriff selbst in keiner der angeschlossenen Datenbanken gefunden, so wird unter den in der Suchtabelle gespeicherten unmittelbaren Nachfolgern derjenige ausgewählt, der dem Suchbegriff am nächsten nachfolgt. Dieser ausgewählte Nachfolger wird dann einem Anwender angezeigt. Der Anwender kann sich dann davon ausgehend den nächsten oder vorherigen Begriff anzeigen lassen. Er hat somit den Eindruck, daß er in einer einzigen Datenbank nach der gewünschten Information sucht. Hierdurch läßt sich die Suche in verschiedenen Datenbanken für den Anwender genauso einfach durchführen, wie die Suche in einer einzigen Datenbank.

Ein weiterer wesentlicher Vorteil des erfindungsgemäßen Verfahrens besteht darin, daß von den einzelnen Datenbanken jeweils nur die dem eingegebenen Suchbegriff am nächsten liegenden Einträge von der Datenbank in die Suchtabelle übertragen zu werden brauchen. Dies ist insbesondere dann von Vorteil, wenn die einzelnen Datenbanken in unterschiedlichen elektronischen Einrichtungen gespeichert sind, die nur über Kommunikationsverbindungen miteinander kommunizieren. Hierbei wird die Übertragungszeit wesentlich verringert, so daß das elektronische Gerät, das die Suche aufgrund der Eingabe des Anwenders hin steuert, sehr schnell auf die Anwendereingabe reagiert, was einen hohen Anwendungskomfort darstellt. Ein weiterer Vorteil besteht darin, daß für die Suchtabelle nur ein relativ geringer Speicherplatz benötigt wird, da, im einfachsten Fall, für jede angeschlossene Datenbank nur drei Speicherplätze zum Ablegen der jeweiligen Namen oder Begriffe erforderlich sind und nur ein Speicherplatz zum Ablegen des Datenbankeintrags benötigt wird, der dem jeweils angezeigten Begriff zugeordnet ist.

Das erfindungsgemäße Verfahren eignet sich somit insbesondere dort zum suchen in Datenbanken, wo trotz geringer Speicherkapazitäten und kleiner Datenübertragungsraten eine schnelle Suche in mehreren Datenbanken gewünscht wird, die sich dem Anwender so darstellt, als ob er eine einzige Datenbank durchsucht.

Da in dem Fall, in dem der eingegebene Suchbegriff nicht in einer der Datenbanken gefunden wurde, der angezeigte Nachfolger des Suchbegriffs als neuer Suchbegriff für die Aktualisierung der Suchtabelle benutzt wird, wird die Suche für den Anwender nicht nur noch schneller, sondern auch komfortabler, da genau in der Sortierreihenfolge, also beispielsweise bei der Suche nach Namen in Telefonbuch- oder Adreßbuch-Datenbanken in alphabetischer Reihenfolge, gesucht wird. Die Suche erfolgt also erfindungsgemäß so, als ob sämtliche vorhandenen Datenbanken eine einzige Datenbank bilden würden, die nach dem ausgewählten Sortierkriterium, also beispielsweise alphabetisch sortiert ist.

Nachdem der Suchbegriff oder sein am nächsten nachfolgender Nachfolger angezeigt wurde, kann der angezeigte Begriff entweder ausgewählt werden, um die ihm zugeordneten Daten anzuzeigen und/oder zur weiteren Verarbeitung auswählen, oder ein neuer Suchbegriff bestimmt werden, um die Suche fortzusetzen. Das Bestimmen eines neuen Suchbegriffs erfolgt dabei zweckmäßigerweise durch Rollen oder Scrollen durch die in der Suchtabelle gespeicherten Begriffe. Dabei ist zweckmäßigerweise vorgesehen, daß als neuer Suchbegriff der nächste Vorgänger oder der nächste Nachfolger des angezeigten Begriffs aus der Suchtabelle ausgewählt wird.

Bei einer vorteilhaften Ausgestaltung der Erfindung ist vorgesehen, daß auf eine Suchanfrage hin nur die jeweiligen Vorgänger und Nachfolger des Suchbegriffs in den angeschlossenen Datenbanken sowie, falls vorhanden, der Suchbegriff selbst in der Suchtabelle gespeichert werden, und daß die einem Suchbegriff zugeordneten Daten nur für den angezeigten Begriff aus der entsprechenden Datenbank ausgelesen und gespeichert werden, um auf Anforderung hin angezeigt und/oder weiterverarbeitet werden zu können.

Um die Anzeige der Datenbankeinträge nach dem Auffinden des gewünschten Suchbegriffs weiter zu vereinfachen und zu beschleunigen, ist es vorteilhaft, wenn jedem in der Suchtabelle gespeicherten Begriff eine eindeutige Identifikationsnummer zugeordnet ist, wobei zum Auslesen der einem angezeigten Begriff zugeordneten Daten aus der entsprechenden Datenbank die Identifikationsnummer des angezeigten Begriffs mit einer Auslese-Anforderung übertragen wird.

Gemäß einer anderen Ausgestaltung des erfindungsgemäßen Verfahrens ist es möglich, daß auf eine Suchanfrage hin von den angeschlossenen Datenbanken zusammen mit den jeweiligen Vorgängern und den Nachfolgern des Suchbegriffs sowie, falls vorhanden, mit dem Suchbegriff selbst auch die zugeordneten Daten in der Suchtabelle gespeichert werden, um auf Anforderung hin angezeigt und/oder weiterverarbeitet werden zu können. Diese Ausgestaltung des Verfahrens ist insbesondere dann vorteilhaft, wenn die relativ große Datenübertragungsraten zwischen den Datenbanken und der Suchtabelle möglich sind und die Suchtabelle selbst über genügend Speicherplatz verfügt.

Die gleichzeitige, schnelle und komfortable Suche in zwei oder mehr Datenbanken wird erfindungsgemäß dadurch ermöglicht, daß die Datenbanken in einem Datenbanksystem zusammengefaßt werden, in welchem jeder der Datenbanken eine Datenbanksteuereinrichtung zugeordnet ist.

Das Datenbanksystem umfaßt dabei ferner eine Datenbank- Hauptsteuervorrichtung, die mit den Datenbanksteuereinrichtungen verbindbar ist, um Daten und Steuerbefehle zu den Datenbanksteuervorrichtungen zu Übertragen und von diesen zu empfangen, und der ein Suchtabellen- Speicher zugeordnet ist, in dem von den Datenbanksteuereinrichtungen übertragene Daten speicherbar sind, sowie eine mit der Datenbank-Hauptsteuervorrichtung verbundene Benutzerschnittstelle, über die zum gleichzeitigen Suchen von Daten in allen angeschlossenen Datenbanken Suchbegriffe und Steuerbefehle eingebbar und bei der Suche in den angeschlossenen Datenbanken gefundene Begriffe und Daten ausgebbar sind.

Vorteilhafterweise ist vorgesehen, daß die Datenbank-Hauptsteuervorrichtung mit einer Datenbankzugriffs-Schnittstelle verbunden ist, an die die Datenbanksteuereinrichtungen der Datenbanken zum Austausch von Daten und Steuerbefehlen mittels Kommunikationsverbindungen anschließbar sind. Als Kommunikationsverbindungen können dabei Funkverbindungen, wie beispielsweise mit Radiofrequenzen arbeitende Hochfrequenzschnittstellen, z.B. bei geringer Reichweite nach dem Bluetooth-Standard, bei großer Reichweite nach dem GPRS (General Packet Radio Service) oder UMTS-Standard (Universal Mobile Telecommunication Service), Infrarotverbindungen oder auch drahtgebunden Verbindungen vorgesehen sein.

Die Erfindung läßt sich grundsätzlich für sämtliche Datenbanken anwenden, deren Einträge in irgendeiner Form mit "kleiner als" "gleich" und "größer als" eindeutig geordnet werden können. Gemäß dem Hauptanwendungsbereich der vorliegenden Erfindung, nämlich der Kommunikation ist vorgesehen, daß die Datenbanken Telefonbuch-, Adreßbuch- und/oder Terminkalender-Datenbanken sind.

Dabei ist es besonders zweckmäßig, wenn die Datenbanken auf verschiedenen Vorrichtungen vorgesehen sind, von denen zumindest eine ein Telefon, insbesondere ein Mobiltelefon ist, wobei die Datenbank-Hauptsteuervorrichtung im Telefon, insbesondere im Mobiltelefon vorgesehen ist. Hierbei läßt sich die Benutzerschnittstelle des Telefons, also dessen verschieden Eingabe- und Ausgebemöglichkeiten, wie Tastatur und gegebenenfalls Sprachbefehleingabeeinheit sowie Bildschirm und Sprachausgabeeinheit als Benutzerschnittstelle für das Datenbanksystem nutzen.

Bei einer anderen Weiterbildung der Erfindung ist vorgesehen, daß mehrere Datenbank-Hauptsteuervorrichtungen vorgesehen sind, von denen jede in einer anderen Vorrichtung angeordnet ist.

Die Erfindung wird im folgenden beispielsweise anhand der Zeichnung näher erläutert. Es zeigen:
Fig. 1 eine schematische Darstellung mehrerer miteinander kommunizierender elektronischer Geräte, in denen Datenbanken vorgesehen sind,
Fig. 2 ein schematisches Blockschaltbild der Anordnung der einzelnen Datenbankspeicher in den elektronischen Geräten,
Fig. 3 ein schematisches Blockschaltbild des erfindungsgemäßen Datenbanksystems und
Fig. 4a bis 4c Tabellen zur Veranschaulichung von Datenbankeinträgen in verschiedene Datenbanken.

In den verschiedenen Figuren der Zeichnung sind einander entsprechende Elemente mit gleichen Bezugszeichen versehen.

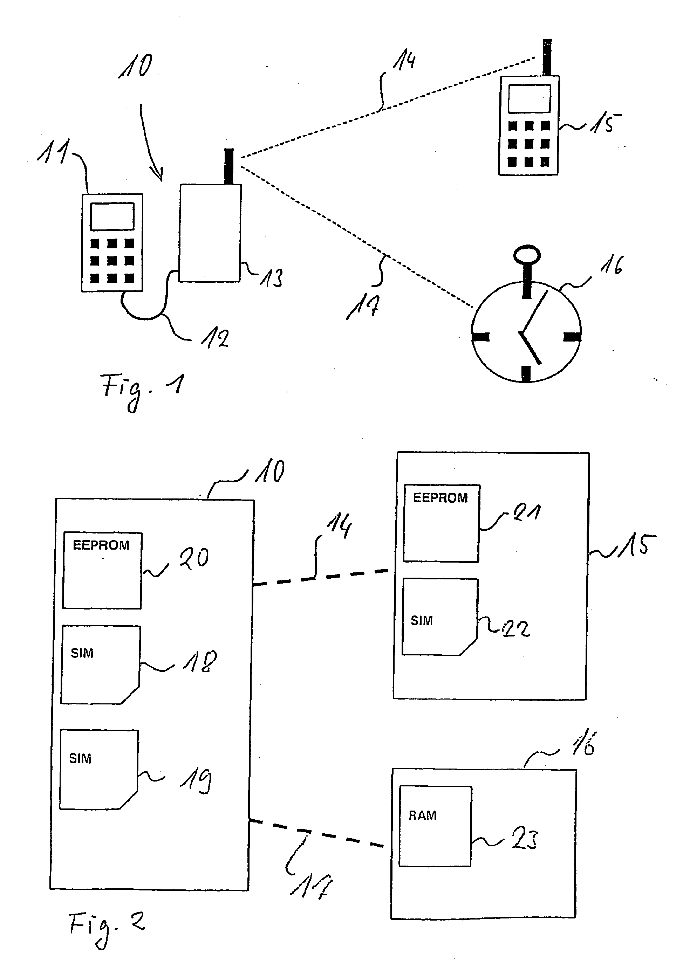

Fig. 1 zeigt zwei Mobiltelefone, nämlich ein Autotelefon 10 mit einem Handapparat 11, der über eine Leitung 12 mit einem Telefon 13 verbunden ist und ein sogenanntes Handy, das im folgenden als Mobiltelefon 15 bezeichnet wird. Das Mobiltelefon 15 ist über eine Funkschnittstelle 14, insbesondere über eine digitale Funkschnittstelle mit dem Autotelefon 10 verbunden. Ferner ist als weiteres elektronisches Gerät mit einer Datenbank eine Uhr 16 vorgesehen, in der ein elektronisches Notizbuch, das auch eine Telefonbuchdatenbank umfaßt, vorgesehen ist. Das telefonische Notizbuch der Uhr 16 steht über eine weitere Funkschnittstelle 17 mit dem Autotelefon 10 in Verbindung.

Wie Fig. 2 schematisch zeigt, sind in dem Autotelefon 10 drei Speicher vorgesehen, auf denen Telefonbuchdatenbanken, im folgenden kurz als Telefonbuch oder -bücher bezeichnet, aufgezeichnet sind. Sowohl auf einer SIM-Karte 18 im Handapparat 11 und einer SIM-Karte 19 im Telefon 13 als auch auf einem Speicher 20 des Telefons 13, der beispielsweise als elektrisch löschbarer, programmierbarer Nur-Lesespeicher (EEPROM) ausgebildet ist, sind drei verschiede Telefonbücher physikalisch getrennt voneinander gespeichert. Das Handy oder Mobiltelefon 15 umfaßt zwei Telefonbücher, von denen das eine auf dem Speicher 21 des Mobiltelefongeräts selbst und das andere auf der SIM-Karte 22 gespeichert ist. Die Uhr 16 umfaßt einen statischen Speicher 23 mit wahlfreiem Zugriff (statischen RAM) in dem ein weiteres persönliches Telefonbuch gespeichert ist.

Den auf den SIM-Karten 18, 19, 22 und in den Speichern 20, 21, 23 gespeicherten Telefonbüchern 18', 19', 20', 21', 22', 23' sind Datenbanksteuereinrichtungen zugeordnet, die im folgenden kurz als Steuereinrichtungen 18", 19", 20", 21", 22", 23" bezeichnet werden. Die Steuereinrichtungen 18", 19", 20" der Telefonbücher 18', 19', 20' des Autotelefons 10 sind über drahtgebundene Verbindungen 24 mit einer Datenbank- oder Telefonbuch-Zugriffsschnittstelle 25 verbunden, die Datenübertragungsverbindungen zwischen den Steuereinrichtungen 18" - 23" und einer zentralen Datenbank-Hauptsteuervorrichtung 26 herstellt.

Die Hauptsteuervorrichtung 26, die im dargestellten Ausführungsbeispiel im Autotelefon 10 untergebracht ist, ist mit einem Suchtabellen-Speicher 27 und einer Benutzerschnittstelle 28 verbunden, die hier von der Benutzerschnittstelle des Handapparats 11 gebildet wird.

Die Hauptsteuervorrichtung 26 kann aber auch zusammen mit dem Suchtabellenspeicher 27 im Mobiltelefon 15 vorgesehen sein. In diesem Fall dient dann die Benutzerschnittstelle des Mobiltelefons 15 als Benutzerschnittstelle 28. Es ist auch möglich, daß zwei Hauptsteuervorrichtungen 26 vorgesehen sind, über die dann quasi gleichzeitig auf die Telefonbücher 18' - 23' zugegriffen werden kann.

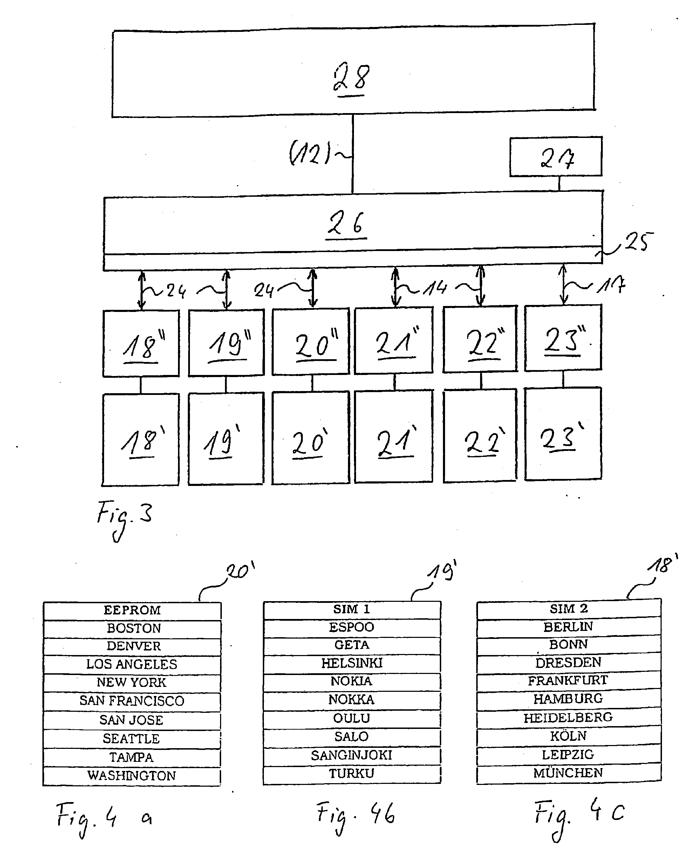

Im folgenden wird das erfindungsgemäße Verfahren anhand einer Suche in drei Telefonbüchern 18', 19', 20' beispielsweise erläutert. In den Figuren 4a bis 4c sind die Einträge in den Telefonbüchern 18', 19', 20' als Namen deutscher, finnischer und US-amerikanischer Städte dargestellt. Die Telefonnummern der Telefonbucheinträge sind der Übersichtlichkeit halber nicht gezeigt.

Soll beispielsweise in den Telefonbüchern 18' - 20' der Telefonbucheintrag für SAN FRANCISCO ermittelt werden, so kann entweder als Suchbegriff SAN allein oder die gesamt Bezeichnung SAN FRANCISCO über die Benutzerschnittstelle 28 der Hauptsteuervorrichtung 26 eingegeben werden. Die Hauptsteuervorrichtung 26 überprüft oder hat bereits überprüft, welche Telefonbücher 18' - 23'verfügbar sind. Hierzu wird vorzugsweise überprüft, welche Telefonbücher angemeldet sind. Dabei stellt die Hauptsteuervorrichtung 26, wie hier vorausgesetzt, fest, daß nur die Telefonbücher 18' - 20' angeschlossen sind.

Die Hauptsteuervorrichtung 26 überträgt daraufhin über die Zugriffsschnittstelle 25 eine Suchanforderung an die Steuereinrichtungen 18"-20" für die Zeichenfolge SAN, die im folgenden einfach als Suchbegriff bezeichnet wird. Für den Suchbegriff SAN ermittelt die Steuereinrichtung 18" im Telefonbuch 18' als vorherigen Eintrag MÜNCHEN und als nächsten Eintrag BERLIN. In entsprechender Weise findet die Steuereinrichtung 19" im Telefonbuch 19' als vorherigen Eintrag SALO und als nächsten Eintrag SANGINJOKI, während die Steuereinrichtung 20" als vorherigen Eintrag NEW YORK und als nächsten Eintrag SAN FRANCISCO findet. Die Steuereinrichtungen 18", 19", 20" liefern dann die gefundenen Namen oder Begriffe zusammen mit einer eindeutigen Identifikationsnummer an die Hauptsteuervorrichtung 26. Die Namen oder Begriffe der gefundenen Telefonbucheinträge werden zusammen mit der eindeutigen Identifikationsnummer (nicht dargestellt) in einer Suchtabelle im Suchtabellen-Speicher 27 gespeichert, wie in der folgenden Tabelle gezeigt ist.

**Tabelle I**

| **Suchrichtung** | **EEPROM** | **SIM 1** | **SIM 2** |
|---|---|---|---|
| **vorheriger** | NEW YORK | SALO | MÜNCHEN |
| **dieser** | - | - | - |
| **nächster** | SAN FRANCISCO | SANGINJOKI | BERLIN |

Da der Suchbegriff SAN als solcher in keinem der Telefonbücher 18' -20' gefunden wurde, wie in der Suchrichtungszeile **dieser** durch Gedankenstriche angedeutet ist, wird der nächstliegende Nachfolger des Suchbegriffs SAN, also SAN FRANCISCO von der Hauptsteuervorrichtung 26 ermittelt und an die Benutzerschnittstelle 28 übertragen, die diesen gefundenen Begriff als Namen des Telefonbucheintrags anzeigt.

Gleichzeitig fordert die Hauptsteuereinrichtung 26 die Steuereinrichtung 20" des Telefonbuchs 20', in dem der angezeigte Begriff gefunden wurde, auf, den gesamten Telefonbucheintrag zu übermitteln und anschließend auch zu dem Suchbegriff SAN FRANCISCO den vorherigen und den nächsten Eintrag zu übertragen. Hierzu überträgt die Hauptsteuereinrichtung 26 die eindeutige Identifikationsnummer zur entsprechenden Steuereinrichtung. Der Telefonbucheintrag für SAN FRANCISCO wird dann entweder gemeinsam mit dem Begriff als solchen in der Suchtabelle oder in einem speziell hierfür vorgesehenen Speicher abgelegt. Außerdem wird die Suchtabelle für den angezeigten Suchbegriff SAN FRANCISCO aktualisiert, so daß sich die folgende Suchtabelle ergibt.

**Tabelle II**

| **Suchrichtung** | **EEPROM** | **SIM 1** | **SIM 2** |
|---|---|---|---|
| **vorheriger** | NEW YORK | SALO | MÜNCHEN |
| **dieser** | SAN FRANCISCO | - | - |
| **nächster** | SAN JOSE | SANGINJOKI | BERLIN |

Will der Anwender nun ausgehend von dem ihm angezeigten Telefonbucheintrag SAN FRANCISCO durch die Telefonbücher Rollen oder Scrollen, so hat er die Möglichkeit über entsprechende Suchlauftasten, Drehknöpfe oder dergleichen die Suchrichtung **vorheriger** oder **nächster** einzugeben. Wählt er **nächster**, so findet die Hauptsteuervorrichtung 26 in der Suchtabelle als nächstliegenden Nachfolger zum Suchbegriff SAN FRANCISCO den Begriff SANGINJOKI und zeigt diesen an. Gleichzeitig wird der Begriff SANGINJOKI an die Steuereinrichtungen 18" - 20" übertragen, um die dazugehörigen vorherigen und nächsten Begriffe festzustellen. Außerdem fordert die Hauptsteuervorrichtung 26 die Steuereinrichtung 19" auf, den gesamten Telefonbucheintrag für SANGINJOKI zu übermitteln. Nach dem Aktualisieren ergibt sich die folgende Suchtabelle.

**Tabelle III**

| **Suchrichtung** | **EEPROM** | **SIM 1** | **SIM 2** |
|---|---|---|---|
| **vorheriger** | SAN FRANCISCO | SALO | MÜNCHEN |
| **dieser** | - | SANGINJOHI | - |
| **nächster** | SAN JOSE | TURKU | BERLIN |

Wird weiter die Suchrichtung **nächster** gewählt, so ergibt sich als neuer Suchbegriff SAN JOSE, während für die Suchrichtung **vorheriger** wiederum der Begriff SAN FRANCISCO gefunden werden würde. Wird ausgehend von der Suchtabelle II jedoch der vorherige Begriff gewählt, so wird der neue Suchbegriff SALO und es ergibt sich die folgende Suchtabelle.

**Tabelle IV**

| **Suchrichtung** | **EEPROM** | **SIM 1** | **SIM 2** |
|---|---|---|---|
| **vorheriger** | NEW YORK | OULO | MÜNCHEN |
| **dieser** | - | SALO | - |
| **nächster** | SAN FRANCISCO | SANGINJOKI | BERLIN |

Wird weiter in Richtung **vorheriger** gerollt oder gescrollt so ergibt sich als neuer Suchbegriff OULO, für den dann in dem Telefonbuch 19', aus dem der neue Suchbegriff stammt, der Vorgänger und Nachfolger gesucht und aus dem Telefonbuch 19' der Telefonbucheintrag von der Hauptsteuervorrichtung 26 über die Steuereinrichtung 19" abgerufen wird.

**Tabelle V**

| **Suchrichtung** | **EEPROM** | **SIM 1** | **SIM 2** |
|---|---|---|---|
| **vorheriger** | NEW YORK | NOKKA | MÜNCHEN |
| **dieser** | - | OULO | - |
| **nächster** | SAN FRANCISCO | SALO | BERLIN |

Es zeigt sich somit, daß mit Hilfe des erfindungsgemäßen Verfahrens durch mehrere Telefonbücher wie durch ein einziges Telefonbuch gerollt werden kann, das alphabetisch geordnet ist. Der Anwender greift also auf ein virtuelles Telefonbuch zu, das die Einträge sämtlicher angeschlossener Telefonbücher in streng alphabetischer Reihenfolge enthält. Wenn der Hauptsteuervorrichtung ein genügend großer Suchtabellenspeicher 27 zur Verfügung steht, ist es auch möglich, anstelle eines Vorgängers und eines Nachfolgers des Suchbegriffs für jedes Telefonbuch zwei oder mehr Vorgänger und zwei oder mehr Nachfolger zu ermitteln und im Suchtabellenspeicher 27 zu speichern, wodurch die Antwortgeschwindigkeit des erfindungsgemäßen Verfahrens weiter erhöht werden kann.

Bei entsprechend hoher Speicherkapazität und hohen Datenübertragungsraten zwischen Hauptsteuervorrichtung 26 und den Steuereinrichtungen 18"-23" kann auch vorgesehen sein, daß nicht nur die Namen der Telefonbucheinträge sondern die gesamten Telefonbucheinträge von Vorgänger und Nachfolger übertragen und im Suchtabellenspeicher gespeichert werden. In diesem Fall könnte auch vorgesehen sein, daß dem Anwender nicht nur der Name des Telefonbucheintrags sondern auch gleichzeitig die zugeordnete Telefonnummer angezeigt wird.

Das erfindungsgemäße Verfahren läßt sich auch auf die Suche von Telefonnummern anwenden, wobei gleichzeitig Filter vorgesehen sein können, die es erlauben, nur Telefonnummern mit einer bestimmten Landes- und/oder Ortsvorwahl anzuzeigen. Auf diese Weise ist es beispielsweise möglich, nur Telefonnummern mit der Vorwahl 0049 234 für Bochum oder mit der Vorwahl 0049 89 für München anzuzeigen, umbestehende Kontakte in Bochum oder München festzustellen.

Die beschriebene Suche läßt sich auch auf Einträge in einer Terminkalender-Datenbank anwenden, da sowohl Datum als auch Uhrzeit eindeutig nach "früher", "jetzt" und "später" sortiert werden können, was den Begriffen "kleiner als", "gleich" und "größer als" entspricht.

Das erfindungsgemäße Datenbanksystem läßt sich ferner einfach erweitern, indem zusätzliche Telefonbuchdatenbanken angeschlossen werden, solange die Kapazität des Suchtabellenspeichers 27 ausreicht. Wird beispielsweise das Mobiltelefon 15 in den Bereich des Autotelefons 10 gebracht, so daß über die Funkschnittstelle 14 Daten zwischen dem Mobiltelefon 15 und dem Autotelefon 10 ausgetauscht werden können, so melden sich die Steuereinrichtungen 21", 22" der Telefonbücher 21', 22' bei der hauptsteuervorrichtung 26 an, die dann beim folgenden Suchen in den Telefonbüchern auch die neu angemeldeten Telefonbücher 21', 22' berücksichtigt. Wird die Verbindung zwischen dem Autotelefon 10 und dem Mobiltelefon 15 unterbrochen, so stellt die Hauptsteuervorrichtung 26 fest, daß die Telefonbücher 21', 22' nicht mehr zur Verfügung stehen und sucht wie oben beschrieben nur in den angeschlossenen Telefonbüchern.

Wird eine Datenbank, z. B. das Telefonbuch 23' von ihrer bzw. seiner Steuereinrichtung 23" in einem Datenbanksystem angemeldet, während eine Suche in den Datenbanken oder Telefonbüchern durchgeführt wird, während also ein Anwender durch die Datenbanken oder Telefonbücher scrollt, so überträgt die Hauptsteuervorrichtung 26 auf die Anmeldung der Datenbank bzw. des Telefonbuchs 23' hin den aktuellen Suchbegriff zusammen mit einer Suchanforderung zur Steuereinrichtung 23", die daraufhin eine entsprechende Suche im Telefonbuch 23' durchführt und die dabei gefundenen Begriffe an die Hauptsteuervorrichtung 26 zum Einschreiben in die Suchtabelle zurück überträgt, wo diese Begriffe in der gleichen Weise behandelt werden, wie die anderen auch. Das erfindungsgemäße Verfahren ermöglicht somit eine reibungslose Suche in den Datenbanken eines Datenbanksystems selbst dann, wenn Datenbanken hinzugefügt oder entfernt werden.

Die vorliegende Erfindung ermöglicht es somit einem Anwender, seine verschiedenen persönlichen Telefonbücher oder andere Datenbanken wie ein einzelnes Telefonbuch oder eine einzelne Datenbank zu durchsuchen. Durch diese nahtlose Integration der verschiedenen Telefonbücher oder Datenbanken zu einem virtuellen Telefonbuch oder einer virtuellen Datenbank wird die Handhabung der Telefonbücher wesentlich erleichtert. Die Struktur des erfindungsgemäßen Verfahrens ermöglicht es, eine wirksame Suche mit geringer Datenübertragung und geringem Bereitschaftsaufwand durchzuführen. Insbesondere ist es nicht erforderlich, beim Aufbau des Datenbanksystems zunächst die Dateninhalte der angeschlossenen Datenbanken vollständig in einen gemeinsamen Speicher zu übertragen, um dann dort zu suchen. Hierdurch wird die Anlaufzeit vom Einschalten des Systems bis zur Suchbereitschaft deutlich reduziert. Darüber hinaus wird nur relativ wenig Arbeitsspeicher benötigt, da nur eine geringe Anzahl von Telefonbucheinträgen, vorzugsweise nur ein einziger Telefonbucheintrag vollständig aus der Telefonbuchdatenbank in den Arbeitsspeicher übernommen zu werden braucht.

Für den Aufbau des erfindungsgemäßen Datenbanksystems eignen sich alle Arten von Kommunikationsverbindungen, insbesondere Funkverbindungen und Infrarotverbindungen sowie auch drahtgebundener Verbindungen, die insbesondere dann zum Einsatz kommen, wenn zwei oder mehr Datenbankspeicher physikalisch getrennt voneinander in einem Gerät angeordnet sind, wie z.B. in einem Autotelefon oder einem Mobiltelefon.

## Patentansprüche

1. Verfahren zum Suchen von Daten in zumindest zwei Datenbanken (18'-23'), deren Einträge gemeinsam eindeutig geordnet werden können, wobei die Datenbanken jeweils in verschiedenen Vorrichtungen angeordnet sind, die über eine Funkverbindung verbunden sind, von denen zumindest eine ein Mobiltelefon ist, zum Suchen von Telefonbuch-, Adressbuch- oder Terminkalendereinträgen oder dergleichen in zumindest zwei Telefonbuch-, Adressbuch- oder Terminkalender-Datenbanken oder dergleichen, bei dem:
ein Suchbegriff eingegeben wird,
entsprechend dem eingegebenen Suchbegriff aus jeder der Datenbanken (18'-23') der oder mehrere nächste Vorgänger und der oder mehrere nächste Nachfolger des Suchbegriffs, gemäß der gemeinsamen eindeutigen Ordnungsmöglichkeit, sowie, falls als solcher vorhanden, der Suchbegriff in einer Suchtabelle gespeichert werden, und
der Suchbegriff als solcher, falls er in der Suchtabelle gespeichert ist, oder der Begriff von den in der Suchtabelle gespeicherten nächsten Nachfolgern, der dem eingegebenen Suchbegriff am nächsten nachfolgt, angezeigt wird,
wobei entweder
der angezeigte Begriff ausgewählt wird, um die ihm zugeordneten Daten anzuzeigen und/oder zur weiteren Verarbeitung auszuwählen, oder
ein neuer Suchbegriff bestimmt wird, um die Suche fortzusetzen, und wobei als neuer Suchbegriff der nächste Vorgänger oder der nächste Nachfolger des angezeigten Begriffs aus der Suchtabelle ausgewählt wird.

2. Verfahren nach Anspruch 1, **dadurch gekennzeichnet, dass** der angezeigte nächster Nachfolger als Suchbegriff für eine Aktualisierung der Suchtabelle benutzt wird.

3. Verfahren nach einem der vorstehenden Ansprüche, **dadurch gekennzeichnet, dass** auf eine Suchanfrage hin nur die jeweiligen nächsten Vorgänger und nächsten Nachfolger des Suchbegriffs in den angeschlossenen Datenbanken sowie, falls als solcher vorhanden, der Suchbegriff in der Suchtabelle gespeichert werden, und dass die einem Suchbegriff zugeordneten Daten nur für den angezeigten Begriff aus der entsprechenden Datenbank (18'-23') ausgelesen und gespeichert wird, um auf Anforderung hin angezeigt und/oder weiterverarbeitet werden zu können.

4. Verfahren nach einem der vorstehenden Ansprüche, **dadurch gekennzeichnet, dass** jedem in der Suchtabelle gespeicherten Begriff eine eindeutige Identifikationsnummer zugeordnet ist.

5. Verfahren nach Anspruch 4, **dadurch gekennzeichnet, dass** zum Auslesen der einem angezeigten Begriff zugeordneten Daten aus der entsprechenden Datenbank die Identifikationsnummer des angezeigten Begriffs mit einer Auslese-Anforderung übertragen wird.

6. Verfahren nach einem der Ansprüche 1 oder 2, **dadurch gekennzeichnet, dass** auf eine Suchanfrage hin von den angeschlossenen Datenbanken zusammen mit den jeweiligen nächsten Vorgängern und den nächsten Nachfolgern des Suchbegriffs sowie, falls als solcher vorhanden, mit dem Suchbegriff auch die zugeordneten Daten in der Suchtabelle gespeichert werden, um auf Anforderung hin angezeigt und/oder weiterverarbeitet werden zu können.

7. Datenbanksystem, zur Durchführung des Verfahrens zum Suchen von Daten nach einem der vorstehenden Ansprüche, mit
zumindest zwei Datenbanken (18'-23') deren Einträge gemeinsam eindeutig geordnet werden können, wobei die Datenbanken jeweils in verschiedenen Vorrichtungen angeordnet sind, von denen zumindest eine ein Mobiltelefon ist, und denen jeder eine Datenbanksteuereinrichtung (18"-23") zugeordnet ist,
einer Datenbank-Hauptsteuervorrichtung (26),
die mit einer Datenbankzugriffs-Schnittstelle (25) verbunden ist, an die die Datenbanksteuereinrichtungen (18"-23") der Datenbanken (18'-23') zum Austausch von Daten und Steuerbefehlen mittels Funkverbindungen (14,17) anschließbar sind, um Daten und Steuerbefehle zu den Datenbanksteuereinrichtungen (18"-23") zu übertragen und von diesen zu empfangen, und
der ein Suchtabellen-Speicher (27) zugeordnet ist, in dem von den Datenbanksteuereinrichtungen (18"-23") übertragene Daten speicherbar sind, und einer mit der Datenbank-Hauptsteuervorrichtung (26) verbundenen Benutzerschnittstelle (28), über die zum gleichzeitigen Suchen von Daten in allen angeschlossenen Datenbanken (18'-23') Suchbegriffe und Steuerbefehle eingebbar und bei der Suche in den angeschlossenen Datenbanken (18'-23') gefundene Begriffe und Daten ausgebbar sind,
wobei das Datenbanksystem konfiguriert ist, wenn ein Suchbegriff über die Benutzerschnittstelle (28) eingegeben wird, dass
die Hauptsteuervorrichtung (26) bewirkt,
- dass entsprechend dem eingegebenen Suchbegriff aus jeder der zumindest zwei Datenbanken (18'-23')der oder mehrere nächste Vorgänger und der oder mehrere nächste Nachfolger des Suchbegriffs sowie, falls als solcher vorhanden, der Suchbegriff in einer Suchtabelle in dem Suchtabellen-Speicher (27) gespeichert werden, und dass
- dass der Suchbegriff als solcher, falls er in der Suchtabelle gespeichert ist, oder der Begriff von den in der Suchtabelle gespeicherten nächsten Nachfolgern, der dem eingegebenen Suchbegriff am nächsten nachfolgt, über die Benutzerschnittstelle (28) als gefundene Begriffe ausgegeben werden, und dass
- entweder
∘ der angezeigte Begriff ausgewählt wird, um die ihm zugeordneten Daten anzuzeigen und/oder zur weiteren Verarbeitung auszuwählen,
∘ oder ein neuer Suchbegriff bestimmt wird, um die Suche fortzusetzen, und dass als neuer Suchbegriff der nächste Vorgänger oder der nächste Nachfolger des angezeigten Begriffs aus der Suchtabelle ausgewählt wird.

8. Datenbanksystem nach Anspruch 7, **dadurch gekennzeichnet, dass** die Datenbanken Telefonbuch-, Adressbuch- und/oder Terminkalender-Datenbanken sind.

9. Datenbanksystem nach Anspruch 7 oder 8, **dadurch gekennzeichnet, dass** die Datenbank-Hauptsteuervorrichtung (26) im Mobiltelefon (10) vorgesehen ist.

10. Datenbanksystem nach einem der Ansprüche 7 bis 9, **dadurch gekennzeichnet, dass** mehrere Datenbank-Hauptsteuervorrichtungen (26) vorgesehen sind, von denen jede in einer anderen Vorrichtung angeordnet ist.

## Claims

1. Method for searching of data in at least two databases (18'-23') whose entries can jointly be sorted in a unique way, wherein the databases each are arranged in different apparatuses which are connected via a radio link, at least one of which is a mobile telephone, for searching telephone book, address book or appointment calendar entries or the like in at least two telephone book, address book or appointment calendar databases or the like, in which:
a search term is entered,
in accordance with the search term entered from each of the databases (18'-23') the or a plurality of closest predecessors and the or a plurality of closest successors of the search term, in accordance with the joint unique sorting option, as well as, if such exists, the search term are saved in a search table, and
the search term as such, if it is saved in the search table, or the term is displayed of the closest successors saved in the search table, which closest succeeds the search term entered,
wherein either
the term displayed is selected to display the data allocated to it and/or to select the data allocated to it for further processing, or
a new search term is determined to continue the search, and wherein the closest predecessor or the closest successor of the term displayed is selected as a new search term from the search table.

2. Method according to claim 1, **characterized in that** the closest successor displayed is used as search term for an update of the search table.

3. Method according to any of the preceding claims, **characterized in that** upon a search query only the respective closest predecessors and closest successors of the search term in the connected databases as well as, if such exists, the search term are saved in the search table, and that the data allocated to a search term is read out from the corresponding database (18'-23') only for the term displayed and saved so as to be displayed and/or processed further upon request.

4. Method according to any of the preceding claims, **characterized in that** a unique identification number is allocated to each term saved in the search table.

5. Method according to claim 4, **characterized in that** for reading out the data allocated to a term displayed from the corresponding database the identification number of the term displayed is transmitted with a readout request.

6. Method according to any of claims 1 or 2, **characterized in that** upon a search query from the connected databases together with the respective closest predecessors and the closest successors of the search term as well as, if such exists, with the search term, the allocated data are also saved in the search table so as to be displayed and/or further processed upon request.

7. Database system for implementing a method for searching of data in accordance with any of the preceding claims, with
at least two databases (18'-23') whose entries can jointly be sorted in a unique way, wherein the databases each are arranged in different apparatuses, at least one of which is a mobile telephone, and to each is allocated a data base control unit (18'-23'),
a database main control apparatus (26)
which is connected to a database access interface (25) to which the database control units (18"-23") of the databases (18'-23') can be connected for an exchange of data and control commands via radio links (14, 17) so as to transmit data and control commands to the database control units (18"-23") and receive data and control commands from them, and
to which a search table memory (27) is allocated, in which data transmitted by the database control units (18"-23") can be saved, and
a user interface (28) connected to the database main control apparatus (26), via which search terms and control commands for concurrently searching data in all connected databases (18'-23') can be input and terms and data found during the search in the connected databases (18'-23') can be output,
the database system being configured such that when a search term is input via the user interface (28),
the main control apparatus (26) effects
- that in accordance with the search term entered from each of the at least two databases (18'-23') the or a plurality of closest predecessors and the or a plurality of closest successors of the search term as well as, if such exists, the search term are saved in a search table in the search table memory (27), and that
- the search term as such, if it is saved in the search table, or the term of the closest successors saved in the search table, which closest follows the search term entered, is output as terms found via the user interface (28), and that
- either
∘ the term displayed is selected to display the data allocated to it and/or select the data allocated to it for further processing,
∘ or a new search term is determined to continue the search and that the closest predecessor or the closest successor of the term displayed is selected as a new search term from the search table.

8. Database system according to claim 7, **characterized in that** the databases are telephone book, address book and/or appointment calendar databases.

9. Database system according to claim 7 or 8, **characterized in that** the database main control apparatus (26) is provided in the mobile telephone (10).

10. Database system according to any of claims 7 to 9, **characterized in that** a plurality of database main control apparatuses (26) is provided, each of which being arranged in a different apparatus.

## Revendications

1. Procédé pour rechercher des données dans au moins deux bases de données (18'-23'), dont les entrées peuvent être ordonnées ensemble de manière univoque, les bases de données étant respectivement disposées dans différents dispositifs, lesquels sont reliés via une liaison radio, l'un d'entre eux au moins étant un téléphone portable, pour rechercher des entrées d'annuaires téléphoniques, de carnets d'adresses ou d'agendas ou similaires dans au moins deux bases de données d'annuaires téléphoniques, de carnets d'adresse ou d'agendas ou similaires, dans lequel :
un critère de recherche est saisi,
en fonction du critère de recherche saisi, le prédécesseur le plus proche ou plusieurs prédécesseurs les plus proches et le successeur le plus proche ou plusieurs successeurs les plus proches du critère de recherche de chacune des bases de données (18'-23'), conformément à la possibilité d'ordonnancement univoque commune ainsi que, s'il existe en tant que tel, le critère de recherche, étant enregistrés dans un tableau de recherche, et le critère de recherche en tant que tel, s'il est enregistré dans le tableau de recherche, ou la notion des successeurs les plus proches enregistrés dans le tableau de recherche, laquelle est le plus proche successeur du critère de recherche saisi, étant affiché(e), moyennant quoi
l'on choisit la notion affichée afin d'afficher les données qui lui sont associées et/ou les sélectionner pour un traitement suivant, ou bien
l'on détermine un nouveau critère de recherche afin de poursuivre les recherches, et moyennant quoi on sélectionne en tant que nouveau critère de recherche le prédécesseur le plus proche ou le successeur le plus proche de la notion affichée du tableau de recherche.

2. Procédé selon la revendication 1, **caractérisé en ce que** le successeur le plus proche affiché est utilisé en tant que critère de recherche pour une actualisation du tableau de recherche.

3. Procédé selon l'une des revendications précédentes, **caractérisé en ce que** suite à une requête, on enregistre seulement les prédécesseurs les plus proches respectifs et les successeurs le plus proches respectifs du critère de recherche dans les bases de données raccordées, ainsi que le critère de recherche, s'il existe en tant que tel, dans le tableau de recherche, et **en ce que** les données associées à un critère de recherche sont uniquement sélectionnées et enregistrées pour la notion affichée de la base de données (18'-23') correspondante, pour pouvoir être affichées et/ou continuer d'être traitées sur demande.

4. Procédé selon l'une des revendications précédentes, **caractérisé en ce que** l'on associe à chacune des notions enregistrées dans le tableau de recherche un numéro d'identification univoque.

5. Procédé selon la revendication 4, **caractérisé en ce que**, pour sélectionner les données associées à une notion affichée, on transfère à partir de la base de données correspondante le numéro d'identification de la notion affichée avec une demande de sélection.

6. Procédé selon l'une des revendications 1 ou 2, **caractérisé en ce que**, suite à une requête à partir des bases de données raccordées, on enregistre ensemble avec les prédécesseurs les plus proches respectifs et les successeurs les plus proches respectifs du critère de recherche, ainsi qu'avec le critère de recherche s'il existe en tant que tel, également les données associées dans le tableau de recherche, afin de pouvoir les afficher et/ou continuer de les traiter sur demande.

7. Système de base de données pour la mise en oeuvre du procéder de recherche des données selon l'une des revendications précédentes, avec
au moins deux bases de données (18'-23'), dont les entrées peuvent être ordonnées ensemble de manière univoque, les bases de données étant respectivement disposées dans différents dispositifs, l'un d'entre eux au moins étant un téléphone portable, une installation de contrôle de base de données (18"-23") étant associée à chacun d'entre eux,
un dispositif de contrôle principal de base de données (26),
lequel est en liaison avec une interface d'accès à la base de données (25), à laquelle il est possible de raccorder les installations de contrôle de base de données (18"-23") des bases de données (18'-23') pour l'échange de données et d'instructions de commande à l'aide de liaisons radio (14, 17), afin de transmettre des données et instructions de commande aux installations de contrôle de base de données (18"-23") et en recevoir de celles-ci, et
auquel une mémoire de tableaux de recherche (27) est associée, dans laquelle il est possible de stocker des données transmises par les installations de contrôle de base de données (18"-23"), et avec une interface utilisateur (28) en liaison avec le dispositif de contrôle principal de base de données (26), par l'intermédiaire de laquelle il est possible de saisir des critères de recherche et des instructions de commande pour la recherche simultanée de données dans toutes les bases de données (18'-23') raccordées, et des données et notions trouvées lors de la recherche dans les bases de données raccordées (18'-23') pouvant être sorties,
le système de base de données étant configuré de manière à ce que, lorsqu'un critère de recherche est saisi via l'interface utilisateur (28),
le dispositif de contrôle principal (26) fait en sorte que
- en fonction du critère de recherche saisi, on enregistre à partir de chacune des au moins deux bases de données (18'-23') le prédécesseur le plus proche ou plusieurs prédécesseurs les plus proches et le successeur le plus proche ou plusieurs successeurs les plus proches du critère de recherche, ainsi que le critère de recherche, s'il existe en tant que tel, dans un tableau de recherche dans la mémoire de tableaux de recherche (27), et
- en ce que l'on fait sortir le critère de recherche en tant que tel, s'il est enregistré dans le tableau de recherche, ou bien la notion des successeurs les plus proches enregistrés dans le tableau de recherche, laquelle succède de manière la plus proche au critère de recherche saisi, en tant que des notions trouvées via l'interface utilisateur (28), et en ce que
∘ l'on sélectionne la notion affichée afin d'afficher les données qui lui sont associées et/ou les sélectionner pour un traitement suivant, ou bien
∘ en ce que l'on détermine un nouveau critère de recherche afin de poursuivre les recherches, et en ce que l'on sélectionne en tant que nouveau critère de recherche le prédécesseur le plus proche ou le successeur le plus proche de la notion affichée dans le tableau de recherche.

8. Système de base de données selon la revendication 7, **caractérisé en ce que** les bases de données sont des bases de données d'annuaires téléphoniques, de carnets d'adresses ou d'agendas.

9. Système de base de données selon la revendication 7 ou 8, **caractérisé en ce que** le dispositif de contrôle principal de base de données (26) est prévu dans le téléphone portable (10).

10. Système de base de données selon l'une des revendications 7 à 9, **caractérisé en ce que** plusieurs dispositifs de contrôle principaux de base de données (26) sont prévus, chacun d'entre eux étant prévu dans un autre dispositif.
